# EUROPÄISCHE PATENTANMELDUNG

(11) **EP 3 418 713 A1**
(43) Veröffentlichungstag der Anmeldung: **26.12.2018**
(21) Anmeldenummer: 18000498.8
(22) Anmeldetag: 05.06.2018
(51) Int. Cl.: G01N 1/38, G01N 35/10, B01L 3/00, G01N 35/04

(54) **VORRICHTUNG ZUR MOBILEN BESTIMMUNG EINER EIGENSCHAFT EINER FLÜSSIGEN, FESTEN ODER GASFÖRMIGEN PROBE**

(30) Priorität: 20.06.2017 DE 102017005835
(71) Anmelder: Diehl Metering GmbH, 91522 Ansbach (DE); DIEHL METERING SAS, 68300 Saint-Louis (FR)
(72) Erfinder: Wurster, Marco, DE - 79288 Gottenheim (DE); Mansdörfer, Lennart, DE - 75015 Bretten (DE); Hohn, Beate, DE - 71157 Hildrizhausen (DE); Wackenhut, Thomas, DE - 76131 Karlsruhe (DE); Paul, Moritz, DE - 68623 Lampertheim (DE); Marcel, Reith-Braun, DE - 77815 Bühl (DE)
(74) Vertreter: Diehl Patentabteilung

(57) **Zusammenfassung**

Vorrichtung (1) zur mobilen Bestimmung einer Eigenschaft einer flüssigen, festen oder gasförmigen Probe (2), umfassend ein Gehäuse (3), eine Hohlkammer (5, 5a, 5b, 5c), in der die Probe (2) mit einem Reagenz (4, 4a, 4b) zur Bestimmung der Eigenschaft der Probe (2) in Kontakt bringbar ist, einen Bereich (6, 6a, 6b, 6c) zum Einbringen der Probe (2) in die Hohlkammer (5, 5a, 5b, 5c), wobei die Hohlkammer (5, 5a, 5b, 5c) nach außen hin geschlossen ist, der Bereich (6, 6a, 6b, 6c) zum Einbringen der Probe (2) perforierbar ist, und das Gehäuse (3) dazu vorgesehen ist, das Reagenz aufzubewahren.

## Beschreibung

Die vorliegende Erfindung betrifft eine Vorrichtung zur mobilen Bestimmung einer Eigenschaft einer flüssigen, festen oder gasförmigen Probe sowie eine Einheit, die dazu dient, die Probe in die Vorrichtung einzubringen.

### Technologischer Hintergrund

Die Analyse einer flüssigen, festen oder gasförmigen Probe dient in der Regel dazu, die chemischen, physikalischen und mikrobiologischen Eigenschaften bzw. Parameter der Probe zu bestimmen. Derartige Analysen werden beispielsweise eingesetzt, um Wasserproben hinsichtlich ihres Chlorid-, Sulfat-, Nitrat-, Nitrit-, Ammonium-, Phosphatgehaltes, pH-Werts und/oder ihrer Wasserhärte zu untersuchen. Teilweise handelt es sich bei diesen Analysen um in vielen Ländern gesetzlich vorgeschriebene Analysen, die z. B. in Deutschland durch Verordnungen, wie die Trinkwasserverordnung (TrinkwV) geregelt sind. Beispielsweise ist demnach ein Unternehmer oder sonstiger Inhaber einer Trinkwasserversorgungsanlage verpflichtet, regelmäßig Analysen, wie z. B. chemische Untersuchungen, des Trinkwassers durchzuführen oder durchführen zu lassen, um sicherzustellen, dass das Trinkwasser den Anforderungen entspricht, d. h. die durch die Trinkwasserverordnung festgelegten Grenzwerte nicht überschritten werden.

Die Analyse der Probe wird in der Regel durch Fachpersonal vorgenommen. Hierzu wird die Probe im Feld genommen und anschließend transportiert bzw. eingeschickt und im Labor analysiert. Diese Methodik erfordert einen erheblichen Zeit-, Material- und Personalaufwand. Ferner wird die Analyse meist mittels Indikatoren oder Reagenzien durchgeführt, die in der Regel händisch (wie z. B. mittels Pipettieren) mit der Probe in offenen Reaktionsräumen (wie z. B. in Reagenzgläsern) vermischt werden. Die Durchführung derartiger Analysen von nicht ausreichend geschultem Personal oder außerhalb von Laborbedingungen ist jedoch aufgrund der dadurch entstehenden Risiken für Mensch und Umwelt und der Fehleranfälligkeit der Reaktionen, z. B. durch falsche Dosierung, nicht geeignet.

### Druckschriftlicher Stand der Technik

Aus der DE 10 2013 017 148 B4 ist ein Verfahren für die mobile Ermittlung eines Größenwertes bzw. eines Parameters einer Flüssigkeitsprobe bekannt, bei dem die Flüssigkeitsprobe in einem tragbaren Reaktionsbehälter mit einem Reaktionsmittel bzw. Reagenz zu einem Analysegemisch vermengt wird. Das Reaktionsmittel wird hierbei einem Tablettenstreifen entnommen und per Hand zusammen mit der Flüssigkeitsprobe in eine Hohlkammer bzw. Reaktionskammer des Reaktionsbehälters gegeben. Die Reaktionskammer besitzt hierzu einen oberseitig angeordneten Bereich zur Eingabe des Reaktionsmittels, d. h. die Reaktionskammer ist nach oben hin geöffnet. Ferner weist die Reaktionskammer einen transparenten Wandbereich auf, der dazu dient, die Flüssigkeitsprobe einzusehen. Dadurch können Farbumschläge, die durch die Vermischung der Flüssigkeitsprobe und des Reaktionsmittels entstehen und zur Parameteranzeige dienen (z. B. pH-Wert-Bestimmung), vom Benutzer eingesehen oder von einer Detektionseinrichtung detektiert werden. Das Verfahren hat hierbei den Nachteil, dass die jeweiligen zur Bestimmung der Eigenschaft benötigten Reaktionsmittel separat mitgeführt und per Hand eingeben werden müssen. Hierbei kann es zu Verwechslungen der Reaktionsmittel sowie Mischungs- und Dosierungsfehlern kommen, wodurch fehlerhafte Messergebnisse entstehen. Zudem können an der Reaktion beteiligte Stoffe aus der Reaktionskammer durch den Bereich zur Eingabe des Reaktionsmittels austreten. In gleicher Weise können Stoffe aus der Umgebung, welche die Reaktion beeinflussen, in die Reaktionskammer gelangen. Dadurch ergeben sich erhebliche Nachteile in Bezug auf die Bestimmungssicherheit. Darüber hinaus können aus der Reaktionskammer austretende Stoffe ein Gesundheitsrisiko für den Benutzer darstellen.

### Aufgabe der vorliegenden Erfindung

Die Aufgabe der vorliegenden Erfindung besteht darin, eine neuartige Vorrichtung zur Verfügung zu stellen, die eine mobile und kosteneffiziente Bestimmung einer Eigenschaft einer Substanz ermöglicht, bei welcher die Bestimmungs- und Betriebssicherheit verbessert und Fehleranfälligkeit verringert wird.

### Lösung der Aufgabe

Die vorstehende Aufgabe wird durch die gesamte Lehre des Anspruchs 1 gelöst. Zweckmäßige Ausgestaltungen der Erfindung sind in den Unteransprüchen beansprucht.

Erfindungsgemäß ist die Hohlkammer nach außen hin abgeschlossen, insbesondere hermetisch abgeschlossen. Daraus resultiert der Vorteil, dass aus der Hohlkammer keine an der Reaktion beteiligten Stoffe austreten und keine Stoffe aus der Umgebung in die Reaktionskammer gelangen können. Ferner ist der Bereich zum Einbringen der Probe perforierbar, um das Einbringen der Probe zu ermöglichen. Das Reagenz wird innerhalb des Gehäuses aufbewahrt und muss dementsprechend nicht zusätzlich von außen zugegeben werden. Der Benutzer muss z. B. keine Dosierung des Reagenz vor Ort vornehmen oder dieses Umfüllen bzw. Entnehmen und Eingeben. Dadurch kann die benötigte Dosierung des Reagenz im Vorfeld z. B. herstellerseitig festgelegt werden. Durch eine derartige Ausgestaltung wird die Bestimmungssicherheit verbessert und Fehleranfälligkeit verringert. Die Vorrichtung kann somit als vollständige Analyseeinheit vorkonfektioniert werden, wodurch Kosten eingespart werden können. Ferner wird ein Kontakt des Benutzers mit zum Teil gesundheitsschädlichen Reagenzien vermieden. Die Betriebssicherheit wird dadurch in besonderem Maße verbessert, sodass auch eine Anwendung durch nicht-Fachpersonal ermöglicht wird.

Zweckmäßigerweise kann das Reagenz innerhalb der Hohlkammer und/oder innerhalb einer im/am Gehäuse zusätzlich angeordneten Reagenzkammer aufbewahrt werden. Dadurch kann das Reagenz sicher, z. B. trocken, gelagert werden.

Vorzugsweise handelt es sich bei dem Bereich zum Eingeben der Probe um einen Applikationsbereich bzw. Injektionsbereich, der aus selbstständig abdichtendem Material gefertigt ist. Der Injektionsbereich ist hierbei insbesondere dazu hergerichtet, von einer Spritze, Kanüle oder Nadel durchdrungen bzw. durchstochen zu werden. Beispielsweise kann als Injektionsbereich ein am Gehäuse angebrachtes oder in das Gehäuse eingearbeitetes Septum vorgesehen sein, welches z. B. aus Kunststoff wie PTFE, Gummi, Silikon, Kautschuk oder dergleichen gefertigt ist. Dadurch wird gewährleistet, dass auch über einen längeren Zeitraum oder bei mehrfachen Analysen keine an der Reaktion beteiligten Stoffe austreten und keine Stoffe aus der Umgebung in die Hohlkammer gelangen können. Die Fehleranfälligkeit wird dadurch erheblich verringert.

Zweckmäßigerweise kann der Bereich zum Eingeben der Probe an der Hohlkammer und/oder der Reagenzkammer angeordnet sein. Dadurch wird eine direkte Probeneingabe bzw. Injektion in die Hohlkammer ermöglicht. Ferner kann z. B. ein Eindringen der Kanüle in die Reagenzkammer ermöglicht werden.

Der Bereich zum Einbringen der Probe bzw. der Injektionsbereich kann zudem dazu verwendet werden, einen oder mehrere an der Bestimmung der Eigenschaft bzw. der Nachweisreaktion beteiligte Stoffe oder Reagenzien in die Vorrichtung einzubringen. Dadurch wird die Klasse an möglichen Reaktionen, die in der Vorrichtung durchgeführt werden können, in besonderem Maße erweitert.

Vorzugsweise ist ein transparenter und/oder transluzenter Bereich am Gehäuse bzw. der Hohlkammer zur optischen Auswertung der Reaktion vorgesehen. Dadurch kann z. B. ein Farbumschlag vom Benutzer in einfacher Weise eingesehen werden, wodurch eine Bestimmung der Eigenschaft im Feld ermöglicht wird. Darüber hinaus kann eine Farbskala zur Bestimmungserleichterung oder eine Mengenskala, z. B. in Zentiliter oder Milliliter, als Maßangabe im Bereich des transparenten und/oder transluzenten Bereichs vorgesehen sein. Dadurch werden dem Benutzer die Bestimmung der Eigenschaft und/oder die Eingabe der Probe erleichtert.

Gemäß einer bevorzugten Ausgestaltung der Erfindung können mehrere Hohlkammern und/oder mehrere Reagenzkammern vorgesehen sein. Daraus resultiert der Vorteil, dass mehrere Nachweisreaktionen bzw. Bestimmungen anhand einer Probe bzw. einer Probenahme durchgeführt werden können, z. B. um eine Eigenschaft mehrfach zu bestimmen, mehrere Eigenschaften zu bestimmen oder eine Eigenschaft und/oder mehrere Eigenschaften zeitversetzt mit ein und derselben Vorrichtung zu bestimmen.

Dementsprechend können auch mehrere Reagenzien vorgesehen sein, um eine oder mehrere Eigenschaften zu bestimmen, die in mehreren Hohlkammern und/oder Reagenzkammern aufbewahrt sind. Daraus resultiert der Vorteil, dass genaue Mischverhältnisse erzielt werden können, um z. B. komplexere Nachweisreaktionen oder mehrstufige Nachweisreaktionen für einzelne Stoffe durchzuführen.

Gemäß einer Ausgestaltungsform kann die Vorrichtung mehrere über- und/oder nebeneinander angeordnete Hohlkammern umfassen. Die Hohlkammern weisen hierbei an einer ersten Seite und/oder an einer zweiten Seite Bereiche zur Eingabe der Probe auf, sodass die Probe z. B. von einer Injektionseinheit, wie einer Spritze, in die Hohlkammern eingebracht werden kann.

Die Bereiche zum Einbringen der Probe bzw. Injektionsbereiche sind vorzugsweise entlang einer gemeinsamen Injektionsachse angeordnet, um zu gewährleisten, dass die Injektionseinheit alle Hohlkammern der Vorrichtung mit einer einzigen Einschubbewegung erreichen kann. Dadurch wird es ermöglicht, die Probe durch eine Spritze und durch einen Eingabeschritt in alle Hohlkammern zu injizieren, ohne dass die Spritze zwischendurch aus dem Gehäuse herausgezogen wird. Die Kontaminationsgefahr und die Gefahr des Entweichens eines Reaktionseduktes aus der Hohlkammer werden.dadurch in besonderem Maße verringert.

Vorzugsweise sind die Hohlkammer und die Reagenzkammer über ein gemeinsames Trennelement gegeneinander abgegrenzt. Daraus resultiert der Vorteil, dass es zu keiner vorzeitigen Mischung von Probe und Reagenz kommt. Zudem ist das jeweilige Reagenz sicher z. B. gegen Feuchtigkeit und/oder Luft gelagert und kann somit über einen längeren Zeitraum zusammen mit der Vorrichtung aufbewahrt werden.

Zweckmäßigerweise kann das Trennelement einen zu öffnenden Bereich aufweisen, durch dessen Öffnung ein Durchgang zwischen Reagenzkammer und Hohlkammer geschaffen wird. In praktischer Weise kann durch die Öffnung eine Mischung bzw. ein Zusammenbringen von Reagenz und Probe herbeigeführt werden, welches zeitlich und kontrolliert vom Benutzer koordiniert wird. Bei dem zu öffnenden Bereich kann es sich beispielsweise um einen dünnen Wandbereich oder eine Folie handeln, die in das Trennelement eingefasst, angeformt oder eingeklebt ist.

Ferner kann ein mechanisch betätigbares Mittel vorgesehen sein, durch dessen Betätigung der zu öffnende Bereich geöffnet wird. In bevorzugter Weise kann das Mittel durch den Benutzer von außerhalb betätigt werden, ohne dass das Gehäuse oder die Hohlkammer geöffnet werden muss.

In vorteilhafter Weise kann als mechanisch betätigbares Mittel eine Spritze, eine Kanüle, eine Nadel oder ein Stift vorgesehen sein. Beispielsweise kann die bei Flüssigproben in der Regel zur Probennahme eingesetzte Spritze verwendet werden.

Alternativ oder zusätzlich kann als mechanisch betätigbares Mittel ein an und/oder in der Reagenzkammer verschiebbar angeordneter Kolben vorgesehen sein, der ein Element, wie z. B. eine Schneidkante oder eine Spitze, zum Öffnen des zu öffnenden Bereichs aufweist. Durch eine vorzugsweise vom Benutzer ausgeführte und von außen auf den Kolben einwirkende Bewegung, z. B. Drücken, Ziehen oder Verschieben, kann somit ein Öffnen des zu öffnenden Bereichs in einfacher Weise vollzogen werden.

Vorzugsweise kann ein Anschlag zur Begrenzung der Bewegung des Kolbens vorgesehen sein, der z. B. am Trennelement angeordnet ist. Dadurch kann verhindert werden, dass der Kolben und/oder die Folie vollständig in die Hohlkammer gelangt, wodurch die Hohlkammer geöffnet oder die Nachweisreaktion negativ beeinflusst werden könnte. Dementsprechend werden durch einen derartigen Anschlag die Betriebs- und Bestimmungssicherheit zusätzlich erhöht.

Gemäß einer besonderen Ausgestaltung der Vorrichtung sind die Reagenzkammer und die Hohlkammer über mindestens zwei relativ zueinander bewegbare bzw. verdrehbare Trenngeometrien getrennt.

Zweckmäßigerweise weisen die Trenngeometrien jeweils mindestens eine Durchgangsöffnung auf, wobei durch das Verdrehen oder Verschieben mindestens einer der Trenngeometrien ein Durchgang zwischen der Hohlkammer und zumindest einer Reagenzkammern herstellbar ist. Beispielsweise dadurch, dass die Durchgangsöffnung der einen Trenngeometrie sowie die Durchgangsöffnung der anderen Trenngeometrie durch die Drehung oder Verschiebung der einen und/oder anderen Trenngeometrie in eine gemeinsame Position oder Flucht bringbar sind, wodurch das Reagenz in die Hohlkammer gelangt bzw. fällt.

Alternativ oder zusätzlich kann es sich bei dem Gehäuse auch um ein mehrteiliges, insbesondere zweiteiliges, Gehäuse handeln, wobei ein erster Gehäuseteil die Hohlkammer und ein zweiter Gehäuseteil die Reagenzkammer bzw. Reagenzkammern umgibt, der erste sowie zweite Gehäuseteil relativ zueinander verdrehbar sind und der erste sowie zweite Gehäuseteil jeweils mindestens eine Durchgangsöffnung zu der jeweiligen Kammer aufweisen. Durch das Verdrehen der Gehäuseteile kann ein Durchgang zwischen der Hohlkammer und mindestens einer Reagenzkammer geschaffen werden, indem zumindest jeweils eine Durchgangsöffnung des ersten sowie des zweiten Gehäuseteils in eine gemeinsame Position oder Flucht gebracht werden.

Zweckmäßigerweise kann die Hohlkammer einen Schacht aufweisen, welcher sich durch die Reagenzkammern hindurch in Richtung des Injektionsbereichs bzw. des Bereichs zum Einbringen der Probe erstreckt. Für den Fall, dass die Reagenzkammern oberhalb der Hohlkammer angeordnet sind, dient der Schacht z. B. dazu, dass die Probe in einfacher Weise von oben in die Hohlkammer injiziert werden kann, ohne dass dabei die Reagenzkammer perforiert werden muss. Zudem kann der Schacht als Bewegungs- oder Drehzentrum der beiden Gehäuseteile dienen.

Vorzugsweise beinhaltet die Hohlkammer mischungsbegünstigende Elemente, die dazu hergerichtet sind, den Mischungsvorgang von Probe sowie Reagenz zu unterstützen. Beispielsweise kann es sich hierbei um Füllmaterial, einen Beschleuniger, einen Katalysator oder Rührfische handeln.

Nebengeordnet beansprucht die vorliegende Erfindung eine Einheit zur mobilen Bestimmung einer Eigenschaft einer flüssigen, festen oder gasförmigen Probe, welche einen Rahmen bzw. ein Gehäuse, eine Injektionseinheit zur vorzugsweise selbsttätigen bzw. automatischen Injektion der Probe, eine Energieversorgung sowie eine Steuer- und Auswerteeinheit umfasst. Die Einheit ist ferner dadurch gekennzeichnet, dass eine erfindungsgemäße Vorrichtung vorgesehen ist und die Injektionseinheit dazu hergerichtet ist, die Probe und/oder einen anderen an der Reaktion beteiligten Stoff, z. B. einen Katalysator, in die Vorrichtung einzubringen bzw. zu injizieren.

Vorzugsweise umfasst die Einheit ein Mischsystem zur Durchmischung der Probe und des Reagenz innerhalb der Vorrichtung. Beispielsweise kann hierzu eine Rüttel-, Schüttel- und/oder Dreheinheit vorgesehen sein, auf die die Vorrichtung platziert wird. Durch die Bewegung wird das Mischungsverhalten verbessert. Alternativ oder zusätzlich können auch die Mischung begünstigende und/oder die Reaktion beschleunigende Elemente innerhalb der Vorrichtung vorgesehen sein. Gemäß einer vorteilhaften Ausgestaltung der Einheit kann als Mischsystem ein Magnetrührer und als mischungsbegünstigendes Element ein Rührfisch vorgesehen sein.

Ferner umfasst die Steuer- und Auswerteeinheit eine Sensorik zur Bestimmung der Eigenschaft und/oder mehrerer Eigenschaften der Probe. Dadurch wird eine selbsttätige bzw. automatische Bestimmung der Eigenschaft erreicht. Der Benutzer muss hierbei keine manuelle Auswertung vornehmen, da diese über die Steuer- und Auswerteeinheit erfolgt. Das Ergebnis kann dem Benutzer anschließend entweder über eine Anzeige an der Einheit zur mobilen Bestimmung angezeigt und/oder über eine nachgeschaltete Ausgabeeinrichtung, wie z. B. einen Drucker, ausgegeben werden.

Zweckmäßigerweise kann die Einheit einen Probenspeicher zum Speichern der Probe umfassen, der mit der Injektionseinheit z. B. über einen Probenschlauch verbunden ist. Die Probe muss somit nicht händisch zugegeben werden, sondern kann direkt aus dem Probenspeicher entnommen werden.

Vorzugsweise ist hierbei eine Versorgungseinheit zur Versorgung der Injektionseinheit mit Probe und/oder zur Befüllung des Probenspeichers vorgesehen. Dadurch kann die Befüllung sowie die Injektion automatisiert werden. Wodurch sich Langzeitmessungen in einfacher Weise realisieren lassen.

Zweckmäßigerweise kann eine Temperaturregeleinheit vorgesehen sein, die dazu hergerichtet ist, die Temperatur der Vorrichtung und/oder der Injektionseinheit und/oder des gesamten flüssigkeitsführenden Systems der Einheit auf einen gewünschten bzw. definierbaren Temperaturwert zu halten, um z. B. eine hohe Genauigkeit bestimmter Nachweisreaktionen zu erzielen. Insbesondere für die Messung mikrobiologischer Parameter ist dies von großer Wichtigkeit.

Alternativ oder zusätzlich kann die Einheit ein Reinigungssystem umfassen, welches Verunreinigungen des flüssigkeitsführenden Systems der Einheit, insbesondere der Injektionseinheit beseitigt. Dies kann z. B. durch eine Spülung des Injektionssystems sowie der flüssigkeitsführenden Zu- und Ableitungen z. B. anhand einer Pumpe erfolgen. In einfacher Weise kann die Spülung automatisch zwischen aufeinanderfolgenden Messungen oder in bestimmten Zeitintervallen erfolgen. Die Messgenauigkeit und Reproduzierbarkeit der Messergebnisse wird dadurch erheblich verbessert.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine vereinfachte Schnittdarstellung einer ersten Ausgestaltung der erfindungsgemäßen Vorrichtung;
- Fig. 2a: eine vereinfachte Schnittdarstellung einer weiteren Ausgestaltung der erfindungsgemäßen Vorrichtung;
- Fig. 2b: eine weitere vereinfachte Schnittdarstellung der Vorrichtung aus Fig. 2a;
- Fig. 3a: eine vereinfachte Schnittdarstellung einer weiteren Ausgestaltung der erfindungsgemäßen Vorrichtung;
- Fig. 3b: eine weitere vereinfachte Schnittdarstellung der Vorrichtung aus Fig. 3a;
- Fig. 4a: eine vereinfachte Schnittdarstellung einer weiteren Ausgestaltung der erfindungsgemäßen Vorrichtung;
- Fig. 4b: eine weitere vereinfachte Schnittdarstellung der Vorrichtung aus Fig. 4a;
- Fig. 5: eine vereinfachte Schnittdarstellung einer weiteren Ausgestaltung der erfindungsgemäßen Vorrichtung, sowie
- Fig. 6: eine vereinfachte Schnittdarstellung einer Ausgestaltung der erfin-dungsgemäßen Einheit.

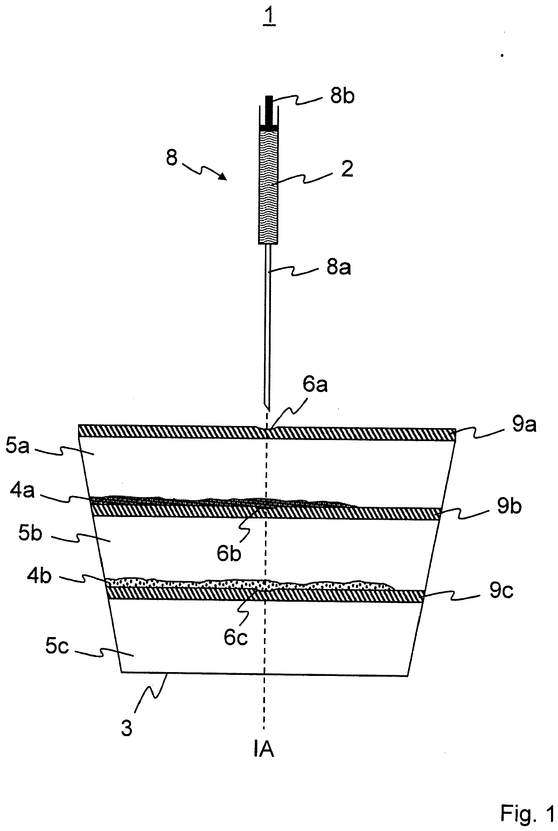

Bezugsziffer 1 in Fig. 1 bezeichnet die erfindungsgemäße Vorrichtung zur mobilen Bestimmung einer Eigenschaft einer flüssigen, festen oder gasförmigen Probe 2. Die Vorrichtung 1 umfasst ein nach außen hin geschlossenes, hermetisch abgeriegeltes Gehäuse 3, welches vorzugsweise aus Kunststoff oder Glas gefertigt ist und transparente und/oder transluzente Bereiche zur optischen Auswertung aufweist. Beispielsweise kann es sich bei der Probe 2 um Wasser handeln, welches bei Feldversuchen mittels chemischer Nachweisreaktionen hinsichtlich einzelner Eigenschaften bzw. Parameter untersucht werden soll. Als Eigenschaft kommt z. B. der Metallgehalt (Kupfer, Nickel, Blei, Cadmium, Eisen), der Halbmetallgehalt (Silizium, Arsen), der Mengenelementgehalt (Calcium, Kalium, Natrium, Magnesium, Phosphor, Schwefel, Chlor), der pH-Wert, die Wasserhärte, der Nitrit- und Nitratgehalt, ein mikrobiologischer Parameter, wie Legionellen, Fäkal- oder Darmkeime (E.coli) oder dergleichen, in Betracht.

Die Vorrichtung 1 erlaubt es hierbei, Edukte bzw. Reagenzien 4a, 4b, die die Nachweisreaktion hervorrufen, in genauem Verhältnis zu mischen, wobei eine Abgeschlossenheit des Systems sichergestellt ist. Die Reagenzien 4a, 4b werden hierbei z. B. herstellerseitig vordosiert und in das Gehäuse 2 der Vorrichtung 1 eingegeben. Als Reagenzien 4a, 4b eignen sich sowohl flüssige, feste (insbesondere pulverförmige) als auch gasförmige Stoffe. Die Vorrichtung 1 umfasst übereinander angeordnete Hohlkammern 5a, 5b, 5c, in denen die Reagenzien 4a, 4b aufbewahrt sind, d. h. die Hohlkammern 5a, 5b, 5c können hierbei gleichzeitig auch jeweils eine Reagenzkammer zur Aufbewahrung eines Reagenz darstellen. Die Hohlkammern 5a, 5b, 5c besitzen jeweils einen oberseitig angeordneten Deckel 9a, 9b, 9c. Zudem fungieren die Deckel 9b, 9c gleichzeitig als Boden der Hohlkammern 5a und 5b, sodass jede der Hohlkammern 5a, 5b, 5c zur Umgebung hin hermetisch abgedichtet ist. Die Deckel 9a, 9b, 9c weisen zudem jeweils einen Injektionsbereich 6a, 6b, 6c auf, wobei die Injektionsbereiche 6a, 6b, 6c entlang einer vorzugsweise im Wesentlichen senkrecht verlaufenden Injektionsachse IA angeordnet sind. Bei den Injektionsbereichen kann es sich z. B. um in den Deckel 9a, 9b, 9c eingelassene Septen handeln.

Zweckmäßigerweise kann, wie in Fig. 1 gezeigt, zur Injektion der Probe 2 eine manuell betätigbare Spritze 8 mit einer Kanüle 8a vorgesehen sein. Ferner umfasst die Spritze 8 eine Einheit, z. B. einen Spritzenkolben 8b, die das Einspritzen und anschließendes Wiedereinziehen ermöglicht. Durch eine nach oben gerichtete Bewegung des Spritzenkolbens 8b kann die Spritze 8, wie in Fig. 1 dargestellt, mit Probe 2 gefüllt werden. Durch eine Höhenänderung der Spritze 8 entlang der Injektionsachse IA kann der oberste Deckel 9a sowie anschließend die nach unten folgenden Deckel 9b, 9c durchstoßen werden. Die zu untersuchende Probe 2 wird z. B. zunächst in die obere Hohlkammer 5a injiziert, indem der Spritzenkolben 8b betätigt wird sobald sich die Kanüle 8a im Bereich der oberen Hohlkammer 5a befindet. Im Anschluss daran kann die Spritze 8 entlang der Injektionsachse IA in die nach unten folgenden Hohlkammern 5b, 5c geschoben werden, sodass auch diese Hohlkammern 5b, 5c mit Probe 2 befüllt werden können. Zwischen den einzelnen Injektionsvorgängen in die jeweiligen Hohlkammern 5a, 5b, 5c können beliebige Zeiträume liegen, um z. B. auch zeitlich andauernde Reaktionen durchführen zu können. Ferner ist es denkbar, dass z. B. auch die bereits reagierten Substanzen aus Probe 2 und Reagenz 4a in Hohlkammer 5a sowie aus Probe 2 und Reagenz 4b in Hohlkammer 5b durch die Spritze 8 aufgenommen werden und anschließend in Hohlkammer 5c injiziert werden, um z. B. weitere Nachweisreaktionen und/oder Neutralisationen durchzuführen.

Nach dem Entnehmen der Spritze 8 bzw. der Kanüle 8a verschließen die Injektionsbereiche 6a, 6b, 6c die Hohlkammern 5a, 5b, 5c bzw. das Gehäuse 3 wieder vollständig, sodass während der gesamten Zeit aus der Vorrichtung 1 keine an der Reaktion beteiligten Stoffe austreten können. Danach oder währenddessen kann die Probe 2 bzw. die Nachweisreaktionen durch den transparenten bzw. transluzenten Bereich optisch ausgewertet werden, um die jeweilige Eigenschaft der Probe 2 zu bestimmen. Die Auswertung kann z. B. durch den Benutzer (Sichtung) oder anhand eines geeigneten Detektors (z. B. Farbedetektor oder Kamera) erfolgen.

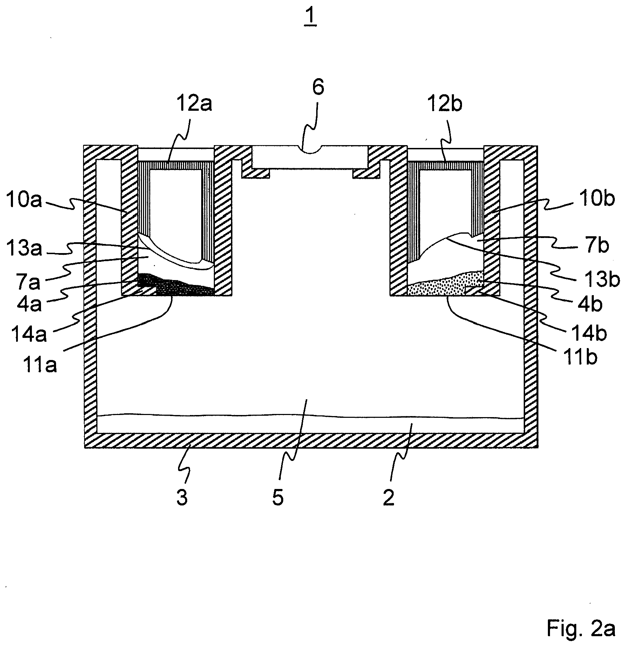

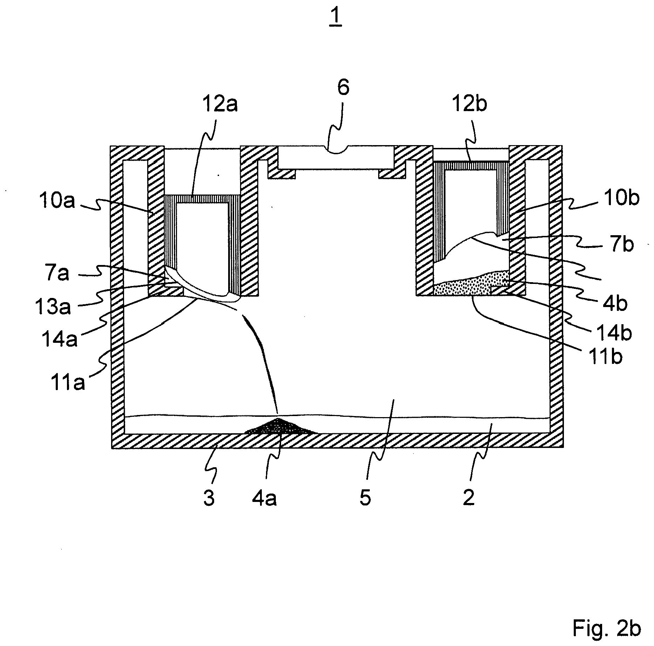

In Fig. 2 ist eine weitere Ausgestaltung der erfindungsgemäßen Vorrichtung 1 dargestellt. Die Vorrichtung 1 ist kapselartig ausgestaltet und umfasst eine Mischkammer bzw. Hohlkammer 5 sowie zwei Reagenzkammern 7a, 7b, die dazu hergerichtet sind, jeweils ein Reagenz 4a, 4b aufzunehmen. Ferner kann auch in der Hohlkammer 5 vor dem Einfüllen der Probe 2 ein Reagenz aufbewahrt werden. Die Reagenzkammern 7a, 7b sind über ein gemeinsames Trennelement 10a, 10b von der Hohlkammer 5 getrennt. Ferner umfasst jedes Trennelement 10a, 10b einen zu öffnenden Bereich 11a, 11b, der jeweils unterseitig an der Reagenzkammer 7a bzw. 7b anschließt und das jeweilige Reagenz 4a bzw. 4b in der Reagenzkammer 7a bzw. 7b zurückhält. Der zu öffnende Bereich 11a, 11b kann beispielsweise als eine in das Trennelement 10a, 10b eingearbeitete bzw. eingeklebte Folie ausgestaltet sein.

Ferner ist in jeder der Reagenzkammern 7a, 7b ein Kolben 12a, 12b angeordnet. Die Reagenzkammern 7a, 7b bzw. die Kolben 12a, 12b können beispielsweise ringförmig um die Drehachse der Vorrichtung 1 angeordnet sein. Der Kolben 12a bzw. 12b besitzt die Form eines umgedrehten U und weist zudem einen längeren und einen kürzeren Schenkel auf, wobei der längere Schenkel angespitzt ist und zwischen den beiden Schenkeln jeweils eine Schneidkante 13a, 13b verläuft. Der Kolben 12a bzw. 12b ist derart ausgestaltet, dass dieser in der Reagenzkammer 7a bzw. 7b ohne äußere Einwirkung in Position gehalten wird. Die Vorrichtung 1 besitzt zudem einen Injektionsbereich 6, der als Septum ausgestaltet ist und dazu hergerichtet ist, dass z. B. eine Kanüle 8a hineingesteckt werden kann. Durch diese kann die Probe 2 aus dem Feldversuch in die Vorrichtung 1 hineingegeben werden. Nach der Eingabe und dem anschließenden Entnehmen der Kanüle 8a verschließt das Septum wieder vollständig, sodass während der gesamten Zeit aus dem System keine an der Reaktion beteiligten Stoffe austreten können.

Vordem Mischen ist die Reagenzkammer 7a, 7b in Richtung Hohlkammer 5 durch den zu öffnenden Bereich 11a, 11b bzw. die Folie abgeschlossen. Zwischen Kolben 12a, 12b und Folie befindet sich das Reagenz 4a, 4b. Um eine Nachweisreaktion hervorzurufen, wird der Kolben 12a durch eine von außen, z. B. eine vom Benutzer ausgeübte, in Richtung Hohlkammer 5 wirkende Kraft bzw. Betätigung in die Vorrichtung 1 hineingedrückt. Dadurch reißt die Folie, bzw. wird aufgeschnitten, und das Reagenz 4a gelangt gemäß Fig. 2b in die Hohlkammer 5. Durch Weiterschieben des Kolbens 12a wird sichergestellt, dass das komplette Reagenz 4a aus der Reagenzkammer 7a austritt. Durch die spezielle Ausgestaltung des Kolbens 12a bzw. 12b als umgedrehtes U mit einem längeren und einem kürzeren Schenkel wird sichergestellt, dass die Folie an einer Seite mit einem sauberen Schnitt aufgetrennt wird und an der anderen Seite weiterhin mit dem Trennelement 10a bzw. 10b verbunden bleibt. Somit kommt die Folie nicht mit den Stoffen in der Hohlkammer 5 in Kontakt und hat keinen Einfluss auf die dort stattfindende chemische Reaktion oder deren Auswertung. Damit der Kolben 12a, 12b nicht in die Hohlkammer 5 eingedrückt werden kann, stößt der kürzere Schenkel nach vollem Verfahrweg auf einen Anschlag 14a, 14b.

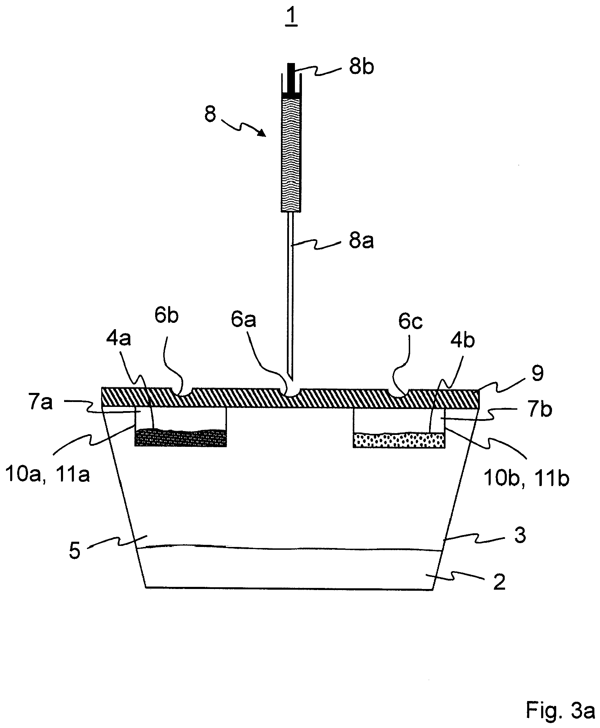

In Fig. 3a ist eine weitere Ausgestaltung der erfindungsgemäßen Vorrichtung 1 dargestellt. Die Vorrichtung 1 umfasst eine Hohlkammer 5, in welche die Probe 2 über die Spritze 8 injiziert werden kann. Hierzu umfasst die Vorrichtung 1 einen durchstechbaren Deckel 9, durch den die Kanüle 8a der Spritze 8 durchgestoßen werden kann und der sich danach wieder selbsttätig schließt. Hierzu sind Injektionsbereiche 6a, 6b, 6c an der Oberseite des Deckels 9 vorgesehen. Ferner umfasst der Deckel 9 im Inneren der Hohlkammer 5 angeordnete Reagenzkammern 7a, 7b. Die Reagenzkammern 7a, 7b umfassen hierbei einen zu öffnenden Bereich 11a bzw. 11b, welcher jeweils durch eine von außen initiierte mechanische Einwirkung, z. B. durch die Kanüle 8a, geöffnet werden kann. Dazu sind die Reagenzkammern 7a, 7b jeweils unter einem der Injektionsbereiche 6b bzw. 6c angeordnet und stehen unter Innendruck. Dieser kann z. B. durch einen hohen Gas- oder Flüssigkeitsdruck beim Befüllen der Reagenzkammern 7a, 7b oder durch Gasdruck, z. B. durch Einpressen von Luft durch die Kanüle 8a, erreicht werden.

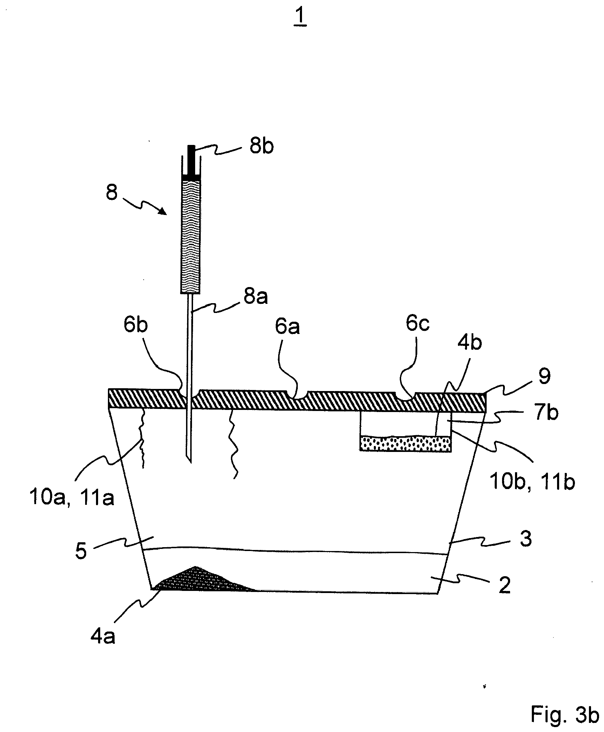

Beispielsweise kann, wie in Fig. 3b dargestellt, das Trennelement 10a durch eine mechanische Einwirkung, insbesondere mittels Einstechen, durch den durchstechbaren Deckel 9 zum Platzen gebracht werden, sodass der Inhalt bzw. das Reagenz 4a austritt, d. h. in die Hohlkammer 5 gelangt. Alternativ kann statt Überdrück in der Reagenzkammer 7a, 7b auch nur ein kleines Loch mit der Kanüle 8a in den Deckel 9 gestochen werden. Durch anschließende Förderung von Luft durch die Kanüle 8a kann ein derartiger Überdruck in der Reagenzkammer 7a erzeugt werden, dass das Reagenz 4a in die Hohlkammer 5 gedrückt wird. Diese beiden Varianten können auch gemeinsam zur Entleerung der Reagenzkammern 7a, 7b angewendet werden.

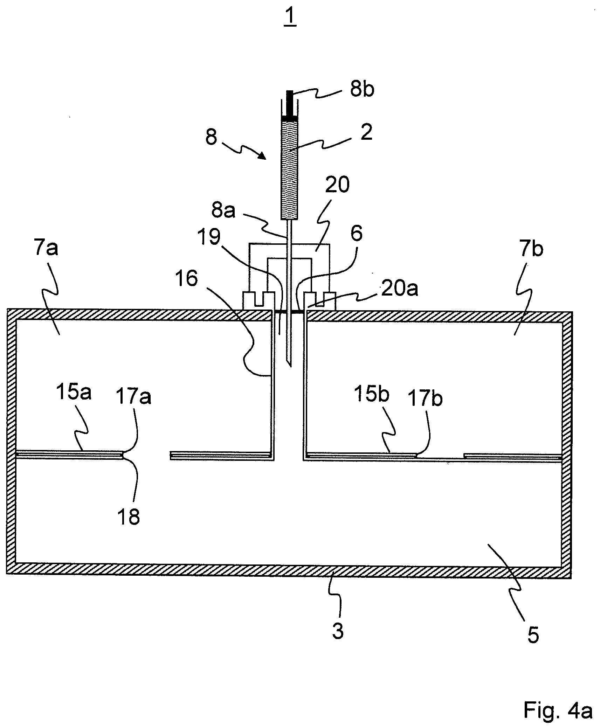

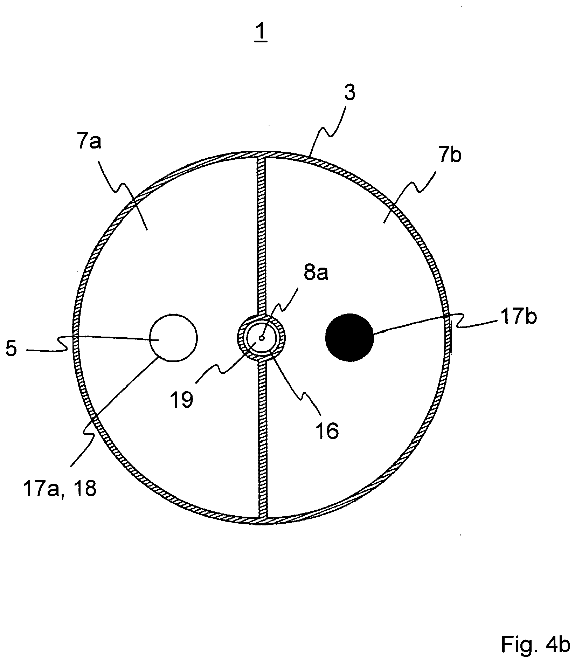

In den Fig. 4a und 4b ist eine weitere Ausgestaltung der erfindungsgemäßen Vorrichtung 1 dargestellt. Die Vorrichtung 1 besteht aus einer unten angeordneten Hohlkammer 5 sowie zwei darüber angeordnet Reagenzkammern 7a, 7b. In den Reagenzkammern 7a, 7b sind Reagenzien bzw. Edukte angeordnet, die der Übersichtlichkeit halber in den Figuren 4a und 4b nicht dargestellt sind. Die Hohlkammer 5 sowie die Reagenzkammern 7a, 7b sind über zwei zueinander relativ verdrehbare Trenngeometrien 15a, 15b sowie 16, beispielsweise Trennscheiben, voneinander abgetrennt. Die Trenngeometrie 16 ist drehbar angeordnet, während die Trenngeometrien 15a und 15b fest in das Gehäuse 2 der Vorrichtung 1 verankert sind und die Reagenzkammern 7a, 7b nach unten hin begrenzen. Darüber hinaus beinhaltet jede Reagenzkammer 7a, 7b eine Durchgangsöffnung 17a bzw. 17b an der festen Trennstruktur, durch welche das jeweilige Reagenz, insbesondere mithilfe der Schwerkraft, in die Hohlkammer 5 gelangen kann. Diese Durchgangsöffnungen 17a, 17b sind in Ausgangsposition durch die verdrehbare Trenngeometrie 16 blockiert. Diese besitzt selbst mindestens eine Durchgangsöffnung 18, durch welche das jeweilige Reagenz in die Hohlkammer 5 gelangen kann, sobald die Durchgangsöffnung 18 der Trenngeometrie 16 in einer Position oder Flucht mit einer der Durchgangsöffnungen 17a bzw. 17b angeordnet ist. Hierzu weist die verdrehbare Trenngeometrie 16 eine Struktur 20a auf, welche aus dem Gehäuse 3 heraus führt und an der Außenseite der Vorrichtung 1 angebracht ist. Diese beinhaltet eine Schlüsselfläche, mithilfe derer die Verdrehung der Trenngeometrie 16 über einen externen Manipulator bzw. ein Betätigungselement 20 ermöglicht wird. Mittig in der Kapsel bzw. der Vorrichtung 1 ist ein Schacht 19 angeordnet, durch welchen die Kanüle 8a bis zur Hohlkammer 5 geschoben werden kann. Die Kanüle 8a wird durch eine speziell vorgesehene Injektionsstelle 6 bzw. ein Septum geschoben, welches zwischen Umwelt und Gehäuseinneren angeordnet ist, sodass während der gesamten Zeit aus dem System keine an der Reaktion beteiligten Stoffe austreten können.

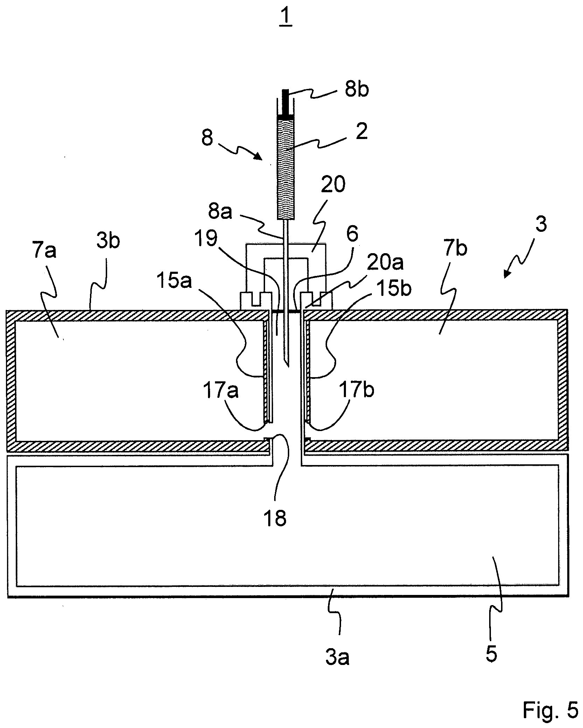

Alternativ zu der Ausgestaltung in Fig. 4a und 4b können sich die Durchgangsöffnungen 17a, 17b, 18 nicht am Boden der Reagenzkammern 7a, 7b, sondern, wie in Fig. 5 gezeigt, an der Mantelfläche des von der Hohlkammer 5 nach oben verlaufenden Schachtes 19 befinden. Bei dem Gehäuse 3 handelt es sich hierbei um ein zweiteiliges Gehäuse 3, welches einen ersten Gehäuseteil 3a und einen zweiten Gehäuseteil 3b umfasst. Der erste Gehäuseteil 3a umgibt hierbei die Hohlkammer 5 und den von der Hohlkammer 5 nach oben in Richtung Injektionsbereich 6 verlaufenden Schacht 19. Der zweite Gehäuseteil 3b umgibt die Reagenzkammer bzw. die Reagenzkammern 7a, 7b. Der erste Gehäuseteil 3a sowie der zweite Gehäuseteil 3b sind relativ zueinander verdrehbar, wobei sich der Drehpunkt im Bereich des Schachts 19 befindet. Durch diesen Aufbau kann die zur Dichtung notwendige Vorspannung auf einfache Weise über eine Übermaßpassung zwischen Schachtmantelfläche und innerer Mantelfläche des zweiten Gehäuseteils 3b bereitgestellt werden.

Zwischen den Trenngeometrien 15a, 15b und 16 sind vorzugsweise Dichtmittel, insbesondere Dichtringe aus Gummi bzw. O-Ringe angebracht (in den Figuren als schwarze Kreise dargestellt), die dazu vorgesehen sind, die Hohlkammer 5 gegen die Reagenzkammern 7a, 7b sowie gegen das Gehäuse 3 abzudichten.

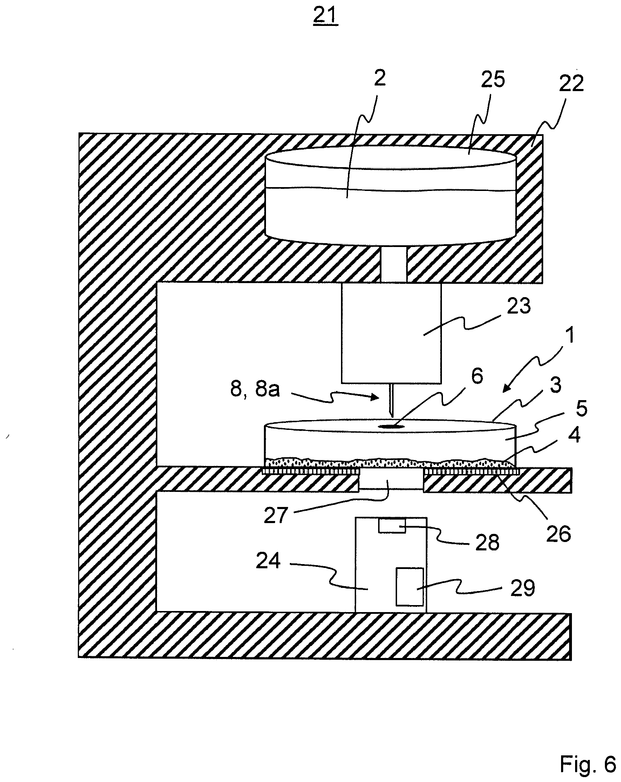

Ferner beansprucht die vorliegende Erfindung eine Einheit 21 zur mobilen Bestimmung einer Eigenschaft der Probe 2, die in Fig. 6 dargestellt ist. Hierbei handelt es sich um ein Analysesystem mittels chemischer Nachweisreaktion in abgeschlossenen Testkapseln bzw. in einer abgeschlossenen Vorrichtung 1. Die Ermittlung der Parameterkonzentration bzw. der Eigenschaft erfolgt automatisiert und ermöglicht es dem Benutzer bedarfsgesteuert und ohne Wissen über chemische Reaktionen eine Aussage über die Parameterkonzentration der Flüssigkeit und z. B. der Wasserqualität zu erhalten. Die Probe 2 kann dabei schnell und vor Ort analysiert werden. Hierzu werden erfindungsgemäße Vorrichtungen 1 verwendet, in denen die Reaktionsedukte bzw. die Probe 2 sowie die Reagenzien 4a, 4b zunächst gemischt bzw. zusammengebracht werden.

Durch zusätzliche Stoffe, die erst nach der auszuwertenden Reaktion in die Vorrichtung 1 bzw. in die Hohlkammer 5 zu den bereits reagierten Stoffen gegeben werden, kann zusätzlich eine Neutralisierungsreaktion hervorgerufen werden, sodass das in der Vorrichtung 1 befindliche Reaktionsprodukt gesundheitlich unbedenklich und nicht umweltschädlich ist und auf einfache Weise entsorgt werden kann. Die Einheit 21 umfasst eine Vorrichtung 1 sowie ein Gehäuse bzw. einen Rahmen 22, eine Injektionseinheit 23 zur automatischen Injektion der Probe 2, eine in den Figuren nicht dargestellte Energieversorgung, wie z. B. ein Akkumulator oder eine Batterie, sowie eine Steuer- und Auswerteeinheit 24. Der Übersichtlichkeit halber ist in Fig. 6 eine Einheit 21 gezeigt, welche die Probe 2 in eine Vorrichtung 1 mit nur einer Hohlkammer 5 injiziert. Die Erfindung umfasst jedoch insbesondere auch eine Einheit 21 für Vorrichtungen 1 mit mehreren Hohlkammern 5 und/oder mehreren Reagenzkammern 7a, 7b.

Die Probe 2 kann in geeigneter Weise zum jeweils gewünschten Zeitpunkt durch die Injektionseinheit 23 dosiert in die Hohlkammer 5 gegeben werden, z. B. mittels verfahrbarer Spritze 8. Durch den Injektionsbereich 6 bzw. ein Septum wird gewährleistet, dass zu keinem Zeitpunkt Flüssigkeit, Gase oder Feststoff aus der Hohlkammer 5 austreten können. Die Injektionseinheit 23 ist dazu hergerichtet, eine bestimmte Menge der Probe 2 in die Hohlkammer 5 zu geben. Die Injektionseinheit 23 umfasst hierbei eine Einheit zur Entnahme der Probe 2 aus einem Probespeicher 25, der zum Speichern der Probe 2 vorgesehen und mit der Injektionseinheit 23 verbunden ist. Ferner kann die Injektionseinheit 23 auch über eine, nicht dargestellte, Ausleitung aus einer probeführenden Leitung verbunden sein. Zur Förderung der Probe 2 kann eine Pumpe oder ein Kolben (jeweils in den Figuren nicht dargestellt) mit der Injektionseinheit 23 verbunden sein. Weiterhin besitzt die Einheit 21 ein Mischsystem 26, welches die Durchmischung der Edukte in der Vorrichtung 1 sicherstellt. Dies kann beispielsweise über eine Einheit erfolgen, die die Vorrichtung 1 bewegt, z. B. rüttelt. Alternativ oder zusätzlich kann eine in die Hohlkammer 5 integrierte Lösung oder auch eine Mischung aus integrierter Lösung und einer Bewegung der Vorrichtung 1 verwendet werden, wie z. B. durch Störkörper oder Schaufeln innerhalb der Hohlkammer 5, die bei Bewegung der Vorrichtung 1 zur Verwirbelung der Probe 2 und des Reagenz 4a beitragen und somit ein Mischen begünstigen.

Gemäß einer besonderen Ausgestaltung der Einheit 21 kann eine, in Fig. 6 nicht dargestellte, Temperaturregeleinheit zur Regelung der Temperatur der Vorrichtung 1 vorgesehen sein. Hierbei kann es sich z. B. um eine Heizung oder eine Einrichtung zum Heizen und/oder Kühlen handeln. Zur Einstellung und Kontrolle der Temperatur ist zudem z. B. ein Temperatursensor vorgesehen. Beispielsweise kann es sich bei der Heizeinrichtung um ein Peltier-Element, eine Plattenheizung oder eine Heizpatronenvorrichtung mit angeschlossenem Lüfter handeln. Ferner kann zur Kühlung auch eine Gaskühlung mittels Luft, Kohlenstoffdioxid oder Stickstoff vorgesehen sein, wobei das kühlende Gas z. B. aus einem Druckbehälter über ein Auslassventil und eine Düse in Richtung Vorrichtung 1 geleitet wird.

Ferner ist die Steuer- und Auswerteeinheit 24 zur Auswertung der Nachweisreaktionen hergerichtet. Beispielsweise kann die Auswertung des Ergebnisses bei Farbreaktionen anhand des Grades der farblichen Veränderung erfolgen, indem der Grad eine Aussage über die Konzentration des untersuchten Parameters bzw. der Eigenschaft zulässt. Diese Aussage wird z. B. mithilfe geeigneter Sensorik getroffen. Beispielsweise kann bei Farbreaktionen ein Spektroskop, ein RGB-Sensor 28 bzw. mehrere Sensoren oder eine Kamera eingesetzt werden.

Die Ansteuerung der Aktorik sowie die Verarbeitung der von den Sensoren gelieferten Daten zu einer Aussage über die Parameterkonzentration übernimmt z. B. ein Mikrocontroller 29. Dieser nimmt darüber hinaus auch die vom Benutzer über ein geeignetes Userinterface (nicht dargestellt), wie z. B. ein Touchdisplay zur Programmwahl, Drückknöpfe und LEDs oder Kombinationen daraus, übermittelten Befehle z. B. zum Programmstart auf und zeigt auf dem Userinterface die Ergebnisse der Analyse an. Ferner ist auch eine drahtlose Kommunikation (z. B. via Bluetooth) zu einem portablen Unserinterface denkbar. Beispielsweise kann der Benutzer dadurch die Einheit 21 auch über ein Smartphone bzw. eine Smartphone-App steuern. In gleicher Weise können auch die Ergebnisse der Bestimmung von der Einheit 21 an das Smartphone übermittelt werden.

Ein bevorzugtes Anwendungsbeispiel einer Einheit 21 ist die Ermittlung von Parameterkonzentrationen in Wasser oder anderen Flüssigkeiten. Hierbei kann z. B. die Injektionseinheit 23 mittels einer nicht dargestellten Pumpe, beispielsweise einer Peristaltikpumpe, mit Probe 2 aus dem Probenspeicher 25 versorgt werden. Die Injektion in die Hohlkammer 5 erfolgt über die Spritze 8. Die Messkapsel bzw. Vorrichtung 1 selbst wird vom Benutzer in die Einheit 21 eingelegt und befindet sich auf einem drehbaren Teller, dem Mischsystem 26, das die Durchmischung der Reaktionsedukte in der Hohlkammer 5 begünstigt. Die Vorrichtung 1 wird nach der Messung vom Benutzer wieder entnommen. Die Einheit 21 erkennt automatisch die eingelegte Vorrichtung 1 und startet das zum jeweiligen zu messenden Parameter dazugehörige Programm zur Bestimmung der Parameterkonzentration. Hierzu kann die jeweilige Vorrichtung 1 Erkennungsmittel, wie z. B. einen RFID Chip oder einen Strichcode aufweisen. Die Auswertung kann z. B. mit einem seitlich oder unterhalb zur Kapsel angebrachten RGB-Sensor 28 der Steuer- und Auswerteeinheit 24 erfolgen. Um eine Sensorauswertung zu ermöglichen, kann zusätzlich ein Sichtfenster 27 vorgesehen sein, welches zwischen der Hohlkammer 5 bzw. dem transluzenten/transparenten Bereich des Gehäuses 3 und dem RGB-Sensor 28 angeordnet ist. Die Anzeige der Ergebnisse erfolgt anschließend direkt am Gerät, z. B. einem Display, welches der Übersichtlichkeit halber in den Figuren nicht dargestellt ist.

Die Einheit 21 kann zusätzlich ein, in den Figuren nicht dargestelltes, Reinigungssystem besitzen, welches Verunreinigungen des flüssigkeitsführenden Systems beseitigt und die Verfälschung der Ergebnisse z. B. durch zu lange stehendes Wasser im Gerät ausschließt. Dazu wird insbesondere vor der Messung eine Spülung des wasserführenden Systems durchgeführt. Das hierfür genutzte Wasser wird anschließend in einen zusätzlichen, ebenfalls nicht dargestellten, Abwasserbehälter gefördert. Außerdem kann das wasserführende System durch Umkehrung der Pumpenmotordrehrichtung und damit der Förderung von Luft nach der Messung leer gepumpt werden. Durch die Entleerung ist sichergestellt, dass auch Leitungen kleinerer Schlauchdurchmesser geleert werden, sodass durch die Kapillarkräfte keine Wassertropfen in den Schläuchen zurückbleiben. Dadurch kann die Einheit 21 auch eine längere Zeit ungenutzt stehen, ohne dass sich Probleme durch Verkeimung oder Verdunstung der Flüssigkeit ergeben.

Ferner umfasst die Erfindung auch eine Einheit 21, in die eine Flüssigkeitsleitung mit der Möglichkeit zur automatischen Messung in bestimmten Zeitintervallen, d. h. zum Monitoring bestimmter Parameter, eingesetzt werden kann. Hierbei wird das zu messende Medium bzw. die Probe 2, z. B. mittels eines geeignet gesteuerten Ventils (Injektionsventil), direkt aus einer Probenleitung entnommen. Aus einem Kapselmagazin wird automatisch eine Vorrichtung 1 bzw. eine Kapsel entnommen (Autosampler) und selbsttätig in die Einheit 21 gefahren. Die Messintervalle und die Reihenfolge der zu messenden Parameter können dabei vom Benutzer frei programmiert und auf seine jeweiligen Bedürfnisse bzw. an den jeweiligen Anwendungsfall angepasst werden. Nach der Auswertung der Messung werden die Ergebnisse gespeichert und auf Benutzerwunsch diesem in aufbereiteter Form zur Verfügung gestellt. Wird ein Grenzwert überschritten, so erhält der Benutzer eine Warnung (Alarmfunktion). Weiterhin ist auch die Datenweiterleitung insbesondere an den Wasserversorger denkbar. Anschließend erfolgt die Entsorgung der Vorrichtung 1 automatisch in einen separaten Behälter (nicht dargestellt). Erfolgt eine Messung in regelmäßigen Abständen von z. B. wenigen Stunden, so kann auch auf ein zusätzliches Reinigungssystem verzichtet werden. Zudem kann ein Einfüllstutzen im Bereich der Injektionseinheit 23 dem Benutzer ermöglichen, auch Flüssigkeiten zu analysieren, welche nicht direkt aus der Probenleitung bzw. dem Probenspeicher 5 stammen.

Ausdrücklich vom Offenbarungsgehalt umfasst sind auch Einzelmerkmalskombinationen (Unterkombinationen) sowie mögliche, nicht in den Zeichnungsfiguren dargestellte Kombinationen einzelner Merkmale unterschiedlicher Ausgestaltungsformen.

### BEZUGSZEICHENLISTE

- 1: Vorrichtung
- 2: Probe
- 3: Gehäuse
- 3a, 3b: Gehäuseteil
- 4, 4a, 4b: Reagenz
- 5, 5a, 5b, 5c: Hohlkammer
- 6, 6a, 6b, 6c: Injektionsbereich
- 7a, 7b: Reagenzkammer
- 8: Spritze
- 8a: Kanüle
- 8b: Spritzenkolben
- 9, 9a, 9b, 9c: Deckel
- 10a, 10b: Trennelement
- 11a, 11b: zu öffnender Bereich
- 12a, 12b: Kolben
- 13a, 13b: Schneidkante
- 14a, 14b: Anschlag
- 15a, 15b: Trenngeometrie
- 16: Trenngeometrie
- 17a, 17b: Durchgangsöffnung
- 18: Durchgangsöffnung
- 19: Schacht
- 20: Betätigungselement
- 20a: Struktur
- 21: Einheit
- 22: Rahmen
- 23: Injektionseinheit
- 24: Steuer- und Auswerteeinheit
- 25: Probenspeicher
- 26: Mischsystem
- 27: Sichtfenster
- 28: RGB-Sensor
- 29: Mikrokontroller

- IA: Injektionsachse

## Patentansprüche

1. Vorrichtung (1) zur mobilen Bestimmung einer Eigenschaft einer flüssigen, festen oder gasförmigen Probe (2), umfassend
ein Gehäuse (3),
eine Hohlkammer (5, 5a, 5b, 5c), in der die Probe (2) mit einem Reagenz (4, 4a, 4b) zur Bestimmung der Eigenschaft der Probe (2) in Kontakt bringbar ist,
einen Bereich (6, 6a, 6b, 6c) zum Einbringen der Probe (2) in die Hohlkammer (5, 5a, 5b, 5c),
**dadurch gekennzeichnet, dass**
die Hohlkammer (5, 5a, 5b, 5c) nach außen hin geschlossen ist,
der Bereich (6, 6a, 6b, 6c) zum Einbringen der Probe (2) perforierbar ist, und
das Gehäuse (3) dazu vorgesehen ist, das Reagenz aufzubewahren.

2. Vorrichtung (1) nach Anspruch 1, **dadurch gekennzeichnet, dass**
das Reagenz (4, 4a, 4b) innerhalb der Hohlkammer (5, 5a, 5b, 5c) und/oder innerhalb einer am Gehäuse (2) zusätzlich angeordneten Reagenzkammer (7a, 7b) aufbewahrt ist.

3. Vorrichtung (1) nach Anspruch 1 oder 2, **dadurch gekennzeichnet,**
**dass** es sich bei dem Bereich (6, 6a, 6b, 6c) um einen Injektionsbereich handelt, der aus selbstständig abdichtendem Material gefertigt ist.

4. Vorrichtung (1) nach mindestens einem der vorhergehenden Ansprüche, **dadurch gekennzeichnet, dass** der Bereich (6, 6a, 6b, 6c) an der Hohlkammer (5, 5a, 5b, 5c) und/oder der Reagenzkammer (7a, 7b) angeordnet ist.

5. Vorrichtung (1) nach mindestens einem der vorhergehenden Ansprüche, **dadurch gekennzeichnet, dass** ein transparenter und/oder transluzenter Bereich zur optischen Auswertung vorgesehen ist.

6. Vorrichtung (1) nach mindestens einem der vorhergehenden Ansprüche, **dadurch gekennzeichnet, dass** mehrere Hohlkammern (5, 5a, 5b, 5c) und/oder mehrere Reagenzkammern (7a, 7b) vorgesehen sind.

7. Vorrichtung (1) nach mindestens einem der vorhergehenden Ansprüche, **dadurch gekennzeichnet, dass** mehrere Reagenzien (4, 4a, 4b) vorgesehen sind.

8. Vorrichtung (1) nach mindestens einem der vorhergehenden Ansprüche, **dadurch gekennzeichnet, dass** die Vorrichtung (1) mehrere über- und/oder nebeneinander angeordnete Hohlkammern (5, 5a, 5b, 5c) umfasst, wobei die jeweilige Hohlkammer (5, 5a, 5b, 5c) an einer ersten Seite und/oder an einer zweiten Seite Bereiche (6, 6a, 6b, 6c) zum Einbringen der Probe (2) aufweist, die vorzugsweise entlang einer gemeinsamen Injektionsachse (IA) angeordnet sind.

9. Vorrichtung (1) nach mindestens einem der Ansprüche 2-8, **dadurch gekennzeichnet, dass** die Hohlkammer (5, 5a, 5b, 5c) und die Reagenzkammer (7a, 7b) über ein gemeinsames Trennelement (10a, 10b) gegeneinander abgegrenzt sind, welches vorzugsweise einen zu öffnenden Bereich (11a, 11b) aufweist, durch dessen Öffnung ein Durchgang zwischen Reagenzkammer (7a, 7b) und Hohlkammer (5, 5a, 5b, 5c) geschaffen wird, wobei bevorzugt ein mechanisch betätigbares Mittel vorgesehen ist, durch dessen Betätigung der zu öffnende Bereich (11a, 11b) geöffnet wird, als welches insbesondere eine Spritze (8), eine Kanüle (8a), eine Nadel oder ein Stift vorgesehen ist.

10. Vorrichtung (1) nach Anspruch 9, **dadurch gekennzeichnet, dass** als Mittel ein an und/oder in der Reagenzkammer (7a, 7b) verschiebbar angeordneter Kolben (12a, 12b) vorgesehen ist, der ein Element zum Öffnen des zu öffnenden Bereichs (11a, 11b) aufweist, wobei vorzugsweise ein Anschlag (14a, 14b) zur Begrenzung der Bewegung des Kolbens (12a, 12b) vorgesehen ist.

11. Vorrichtung (1) nach mindestens einem der vorhergehenden Ansprüche, **dadurch gekennzeichnet, dass** die Reagenzkammer (7a, 7b) und die Hohlkammer (5) über mindestens zwei relativ zueinander bewegbare Trenngeometrien (15a, 15b, 16) getrennt sind und dass vorzugsweise vorgesehen ist, **dass** die Trenngeometrien (15a, 15b, 16) jeweils mindestens eine Durchgangsöffnung (17a, 17b, 18) aufweisen, wobei durch das Verdrehen oder Verschieben der Trenngeometrie (15a, 15b, 16) ein Durchgang zwischen der Hohlkammer (5) und mindestens einer Reagenzkammern (7a, 7b) herstellbar ist.

12. Vorrichtung (1) nach mindestens einem der vorhergehenden Ansprüche, **dadurch gekennzeichnet, dass** es sich bei dem Gehäuse (3) um ein mehrteiliges Gehäuse handelt, wobei ein erster Gehäuseteil (3a) die Hohlkammer (5) und ein zweiter Gehäuseteil (3b) die Reagenzkammer (7a, 7b) umgibt, der erste (3a) sowie zweite Gehäuseteil (3b) relativ zueinander verdrehbar sind und der erste (3a) sowie zweite Gehäuseteil (3b) jeweils mindestens eine Durchgangsöffnung (17a bzw. 17b, 18) zu der jeweiligen Kammer aufweisen, wobei durch das Verdrehen der Gehäuseteile (3a, 3b) ein Durchgang zwischen der Hohlkammer (5) und mindestens einer Reagenzkammer (7a, 7b) herstellbar ist.

13. Vorrichtung (1) nach mindestens einem der vorhergehenden Ansprüche, **dadurch gekennzeichnet, dass** die Hohlkammer (5, 5a, 5b, 5c) einen Schacht (19) aufweist, welcher sich durch die Reagenzkammern (7a, 7b) in Richtung des Bereichs (6, 6a, 6b, 6c) zum Einbringen der Probe (2) erstreckt.

14. Vorrichtung (1) nach mindestens einem der vorhergehenden Ansprüche, **dadurch gekennzeichnet, dass** die Hohlkammer (5, 5a, 5b, 5c) mischungsbegünstigende Elemente umfasst und/oder beinhaltet, die dazu vorgesehen sind, den Mischungsvorgang von Probe (2) sowie Reagenz (4, 4a, 4b) zu unterstützen.

15. Einheit (21) zur mobilen Bestimmung einer Eigenschaft einer flüssigen, festen oder gasförmigen Probe (2), umfassend
einen Rahmen (22),
eine Injektionseinheit (23) zur, vorzugsweise selbsttätigen, Injektion der Probe (2),
eine Energieversorgung, sowie
eine Steuer- und Auswerteeinheit (24),
**dadurch gekennzeichnet, dass**
eine Vorrichtung (1) nach mindestens einem der vorhergehenden Ansprüche vorgesehen ist, und
die Injektionseinheit (23) dazu hergerichtet ist, die Probe (2) in die Vorrichtung (1) einzubringen.

16. Einheit (21) nach Anspruch 15, **dadurch gekennzeichnet, dass** ein Mischsystem (26) zur Durchmischung der Probe (2) und des Reagenz (4) innerhalb der Vorrichtung (1) vorgesehen ist und/oder **dass** die Steuer- und Auswerteeinheit (24) eine Sensorik zur Bestimmung der Eigenschaft und/oder mehrerer Eigenschaften der Probe (2) umfasst.

17. Einheit (21) nach Anspruch 15 oder 16, **dadurch gekennzeichnet, dass** ein Probenspeicher (25) zum Speichern der Probe (2) vorgesehen ist, der insbesondere mit der Injektionseinheit (23) verbunden ist.

18. Einheit (21) nach einem der Ansprüche 15-17, **dadurch gekennzeichnet, dass** eine Versorgungseinheit zur Versorgung der Injektionseinheit (23) mit Probe (2) und/oder zur Befüllung des Probenspeichers (25) vorgesehen ist.

19. Einheit (21) nach einem der Ansprüche 15-18, **dadurch gekennzeichnet, dass** eine Temperaturregeleinheit zur Regelung der Temperatur der Vorrichtung (1) und/oder der Injektionseinheit (23) vorgesehen ist.

20. Einheit (21) nach einem der Ansprüche 15-19, **dadurch gekennzeichnet, dass** ein Reinigungssystem zur Beseitigung von Verunreinigungen der Injektionseinheit (23) vorgesehen ist.
